# EUROPEAN PATENT APPLICATION

(11) **EP 2 485 130 A1**
(43) Date of publication of application: **08.08.2012**
(21) Application number: 10820482.7
(22) Date of filing: 27.09.2010
(51) Int. Cl.: G06F 3/048, G06F 17/21, G06T 11/60

(54) **INFORMATION PROCESSING DEVICE AND PROGRAM**

(30) Priority: 30.09.2009 JP 2009226712
(71) Applicant: NTT DoCoMo, Inc., Tokyo 100-6150 (JP)
(72) Inventor: HASHIDA, Naoki, Tokyo 100-6150 (JP); HAMADA, Hisashi, Tokyo 100-6150 (JP); FUJII, Mizuri, Tokyo 100-6150 (JP); MAEDA, Yoshiaki, Tokyo 100-6150 (JP)
(74) Representative: HOFFMANN EITLE
(86) International application number: PCT/JP2010/066690
(87) International publication number: WO 2011/040367

(57) **Abstract**

[Problem] To arrange display of an image in an attachment to information in such a way that the information is viewable.

[Solution] A communication apparatus stores schedule information and a decorative image attached to the schedule information in association with each other. The communication apparatus specifies a display section, at which the schedule information is displayed, in a schedule area in which the schedule information is arranged. In addition, the communication apparatus determines, as a candidate for a position on a schedule screen at which the decorative image is arranged, a position that, if the decorative image is arranged thereon, makes at least a part of the attached image overlap the schedule area in which the schedule information stored in association with the decorative image is arranged, and further prevents the decorative image from overlapping the specified display section. In addition, the communication apparatus arranges the decorative image on the position selected from a plurality of positions determined as candidates.

## Description

### Technical Field

The present invention relates to arrangement of images in attachments.

### Background Art

There is well known in the art a technology for facilitating viewing of contents of a schedule. Refer, for example, to published patent document 1, in which there is disclosed a memo display for a schedule device, wherein when a size of a character string for display of a memo in a cell of the schedule, the cell corresponding to a specified date in the schedule, is too long for display of the entire memo in one cell, a part of the memo is displayed in a neighboring cell as a result of overflow of the string into the neighboring cell.

Patent Document 1: JP-A-2005-250765

### Summary of the Invention

### Problems to be solved by the Invention

In a case where a schedule is a book made of paper, a sticker may be used to decorate the schedule. In such a case, if the sticker is attached to a column of the schedule at an angle, or extends outward from a column of the schedule the sticker could be attractive to look at and may facilitate reading of the schedule information. On the other hand, when a schedule is displayed on a device such as a mobile phone and schedule information is displayed in a predetermined column of the schedule displayed on the device if an image having a role similar to that of the sticker mentioned above is displayed in the predetermined column of the schedule in a manner similar to that of the sticker above, the image may impede viewing of the schedule information displayed in the column of the schedule.
One of the objects of the present invention is to arrange display of an image in an attachment to information in such a way that the information is viewable.

### Means for Solving the Problem

The present invention provides an information processing apparatus that includes: a display means that displays a screen having an area in which information is arranged; a memory means that stores the information arranged in the area in association with an image to be attached to the information; a specifying means that specifies a display section, at which the information stored by the memory means is displayed, in the area in which the information is arranged; a candidate determining means that determines, as a candidate for a position of the screen on which the attached image is arranged, a position that, if the attached image is arranged thereon, makes at least a part of the attached image overlap a predetermined range in the area in which the information stored in association with the attached image by the memory means is arranged, and further prevents the attached image from overlapping the display section specified by the specifying means; and an arranging means that arranges the attached image stored by the memory means on the position selected from a plurality of positions as candidates determined by the candidate determining means.

In the information processing apparatus according to the present invention, it is conceivable that the arranging means arranges the attached image stored by the memory means in a position that the arranging means randomly selects from plural positions determined as candidates by the candidate determining means.

It is conceivable that the information processing apparatus according to the present invention further includes a modifying means that modifies the size of the attached image stored by the memory means to a randomly determined size, or the posture of the attached image to a randomly determined posture, and that the arranging means arranges the attached image at least one of whose size and posture is modified by the modifying means.

In the information processing apparatus according to the present invention, it is conceivable that the memory means stores the information showing a schedule with a pre-specified time; a time axis is arranged on the screen; the information stored by the memory means is arranged on a position, which corresponds to the time of the schedule shown by the information, on the time axis arranged on the screen; and the candidate determining means specifies the time of the schedule shown by the information stored in association with the attached image by the memory means and removes, from the candidates, a position that, if the attached image is arranged thereon, makes the attached image overflow in the direction corresponding to times later than the specified time on the time axis arranged on the screen.

In the information processing apparatus according to the present invention, it is conceivable that the arranging means specifies, after obtaining the arrangement history of the attached image, a position on which the attached image is frequently arranged based on the obtained history, and preferentially selects the specified position on which the attached image is frequently arranged.

In addition, the present invention provides a program that causes a computer to perform the steps of: displaying a screen having an area in which information is arranged; storing the information arranged in the area in association with an image to be attached to the information; specifying a display section, at which the information stored by the memory means is displayed, in the area in which the information is arranged; determining, as a candidate for a position of the screen on which the attached image is arranged, a position that, if the attached image is arranged thereon, makes at least a part of the attached image overlap a predetermined range including the area in which the information stored in association with the attached image by the memory means is arranged, and further prevents the attached image from overlapping the specified display section; and arranging the attached image stored by the memory means on the position selected from a plurality of positions determined as the candidates.

### Effects of the Invention

According to the present invention, display of an image in an attachment to information can be arranged in such a way that the information is viewable.

### Brief Description of Drawings

Fig. 1 is a block diagram showing the configuration of a communication apparatus according to an embodiment.
Fig. 2 is a diagram showing an example of schedule-book data.
Fig. 3 is a block diagram showing a functional configuration realized by a control unit of the communication apparatus.
Fig. 4 is a diagram showing an example of a new registration screen.
Fig. 5 is a diagram showing an example of a monthly schedule screen.
Fig. 6 is a diagram showing an example of a daily schedule screen.
Fig. 7 is a diagram showing an example of a weekly schedule screen.
Fig. 8 is a diagram showing an example of a daily schedule screen.
Fig. 9 is a diagram showing transitions among schedule screens.
Fig. 10 is a flowchart showing the arranging processing of a decorative image.
Fig. 11 is a diagram describing processing for specifying a display section.
Fig. 12A to 12C are diagrams describing processing for determining a candidate for a position.
Fig. 13 is a diagram that is related to a modification of an embodiment and describes a position that, if an image is arranged thereon, makes the image overflow in the direction corresponding to later times.
Fig. 14 is a diagram that is related to another modification of the embodiment and describes processing for arranging a decorative image in a balloon.

### Description of Reference Numerals

1 communication apparatus
10 control unit
11 CPU
12 ROM
13 RAM
14 EEPROM
20 wireless communication unit
21 antenna
30 display unit
40 operation unit
101 modifying unit
102 specifying unit
103 candidate determining unit
104 arranging unit

### Mode for Implementing the Invention

### [Configuration]

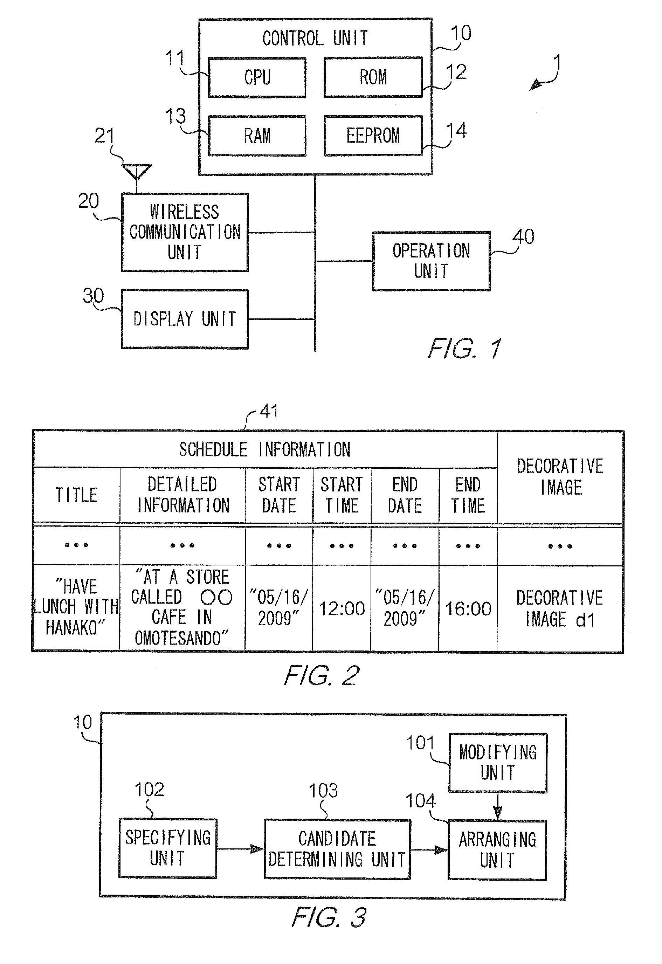

Fig. 1 is a block diagram showing the configuration of a communication apparatus 1 according to this embodiment. This communication apparatus 1 can be, for example, a mobile phone including means that input and output sound such as a microphone and a speaker (not shown in Fig. 1). A control unit 10 includes a CPU (central processing unit) 11, a ROM (read only memory) 12, a RAM (random access memory) 13, and an EEPROM (electrically erasable and programmable read only memory) 14. In this control unit 10, the CPU 11 uses the RAM 13 as a work area and controls the operations of individual units of the communication apparatus 1 by executing programs stored in the ROM 12 or the EEPROM 14. In addition, the EEPROM 14 stores schedule-book data 41. A wireless communication unit 20 includes an antenna 21, and performs data communication with a mobile communication network via radio waves. A display unit 30 includes a liquid crystal display and a liquid crystal driving circuit, and displays an image corresponding to image data provided by the control unit 10 on a screen. An operation unit 40 includes plural operation keys, and supplies an operation signal corresponding to a user's input operation to the control unit 10. Here, if the communication apparatus 1 includes a touch panel, the touch panel can receive the user's input operation.

Next, the schedule-book data 41 stored in the EEPROM 14 will be described. Fig. 2 is a diagram showing an example of the schedule-book data 41. As shown in FIG. 2, "Schedule Information" is associated with a "Decorative Image" in the schedule-book data 41. The "Schedule Information" is information showing a user's schedule. This "Schedule Information" includes a "Title," "Detailed Information," "Start Date," "Start Time," "End Date," and "End Time" of the schedule. A time interval between the "Start time" on the "Start Date" and the "End Time" on the "End Date" is a predetermined schedule time interval. In other words, the "Schedule Information" is information showing a schedule with a pre-specified time. The "Decorative Image" is an image attached to the schedule information. This decorative image can be a still image or a moving image.

Next, the functional configuration realized by the control unit 10 of the communication apparatus 1 will be described. Fig. 3 is a block diagram showing the functional configuration realized by the control unit 10 of the communication apparatus 1. Each of the units of the functional configuration can be realized by native applications executed by the CPU 11 or by Java (registered trade mark) applications executed by the CPU 11. As shown in FIG. 3, the control unit 10 realizes a modifying unit 101, a specifying unit 102, a candidate determining unit 103, and an arranging unit 104. The modifying unit 101 is a modifying means that modifies the size of the above-mentioned decorative image to a randomly determined size, or the posture of the decorative image to a randomly determined posture. The specifying unit 102 is a specifying means that specifies a display section at which information is displayed in a schedule area set up on the schedule screen displayed on the display unit 30. The candidate determining unit 103 is a candidate determining means that determines, as a candidate for a position of the schedule screen on which the above-mentioned decorative image is arranged, a position that, if the decorative image is arranged thereon, makes at least a part of the decorative image overlap the schedule area in which schedule information corresponding to the decorative image is arranged, and further prevents the decorative image from overlapping the display section specified by the specifying unit 102. The arranging unit 104 is an arranging means that arranges the decorative image whose size or posture is modified by the modifying unit 101 on the position selected from plural positions as candidates determined by the candidate determining unit 103.

### [Operation]

The operation of the communication apparatus 1 according to this embodiment will be described.

### (New registration processing of schedule information)

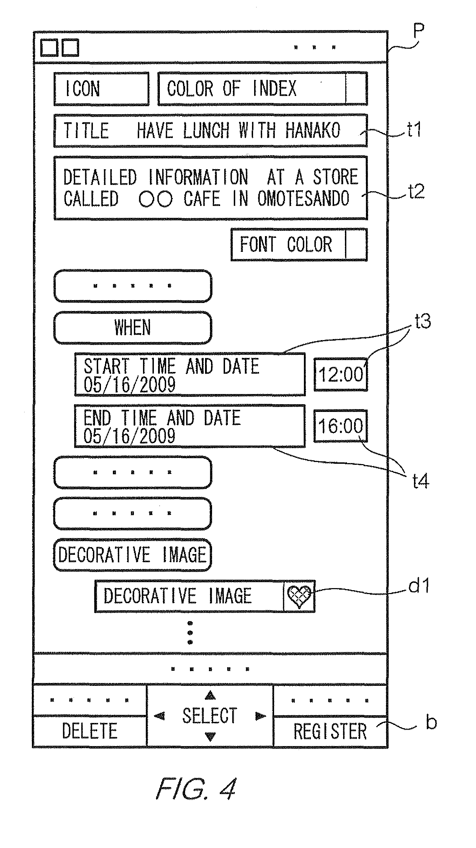

First, new registration processing of schedule information will be described. When registering new schedule information, a user operates the operation unit 40 to direct new registration of the schedule information. Upon receiving the direction of the new registration of the schedule information, the control unit 10 causes the display unit 30 to display a new registration screen P for receiving input of the schedule information. Fig. 4 is a diagram showing an example of the new registration screen P. After the new registration screen P is displayed, the user inputs schedule information by operating the operation unit 40. In an example shown in FIG. 4, "Have Lunch with Hanako" is input into a text box t1 "Title," and "At a Store called OO CAFE in Omotesando" is input into a text box t2 "Detailed Information" on the new registration screen P. In addition, "05/16/2009" and "12:00" are input into a text box t3 "Start Time and Date," and "05/16/2009" and "16:00" are input into a text box t4 "End Time and Date." In addition, the user can designate a decorative image to decorate the input schedule information by operating the operation unit 40. In the example shown in FIG. 4, a heart-shaped decorative image d1 is designated.

After finishing input of the schedule information, the user pushes a registration button b set up on the new registration screen P by operating the operation unit 40. After the registration button b is pushed, the control unit 10 adds the schedule information input into the new registration screen P and the designated decorative image to the schedule-book data 41 stored in the EEPROM 14. In this example, as shown in FIG. 2, the title "Have Lunch with Hanako," the detailed information "At a Store called OO CAFE in Omotesando," the start date "05/16/2009," the start time "12:00," the end date "05/16/2009," the end time "16:00," and the "Decorative Image d1" are added to the schedule-book data 41.

### (Display processing of the schedule screen)

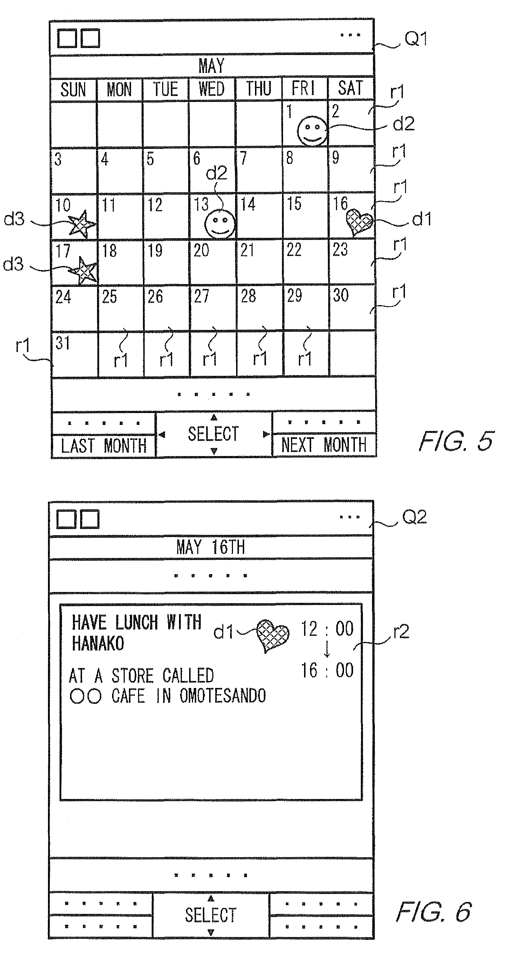

Next, the display processing of the schedule screen will be described. If a user wants to check monthly schedule information, the user directs a monthly schedule screen Q1 to be displayed by operating the operation unit 40. Upon receiving the direction of the display of the monthly schedule screen Q1, the control unit 10 creates the monthly schedule screen Q1 based on the schedule-book data 41 stored in the EEPROM 14. Successively, the control unit 10 causes the display unit 30 to display the created schedule screen Q1. Fig. 5 is a diagram showing an example of the monthly schedule screen Q1. As shown in FIG. 5, plural schedule areas r1 to which days of a month are allocated are set up on this schedule screen Q1. In this case, rows that contain the days of the month are time axes. Arranged in each schedule area r1 is a "Decorative Image" that is associated in the schedule-book data 41 with schedule information that includes a predetermined schedule time interval corresponding to a date allocated to the schedule area r1. For example, in the schedule-book data 41 shown in FIG. 2, the start date "05/16/2009" and the end date "05/16/2009" are associated with the "Decorative Image d1." The start date "05/16/2009" and the end date "05/16/2009" show that the predetermined schedule time interval is included under the date May 16th. In this case, the heart-shaped decorative image d1 is arranged in the schedule area r1 of May 16th.

Next, if the user wants to focus his/her attention on a certain day displayed on the monthly schedule screen Q1, and check schedule information concerning that day, the user designates a schedule area r1 of the date to be focused on by operating the operation unit 40. Here, it will be assumed that the schedule area r1 of May 16th is designated. In this case, the control unit 10 creates a daily schedule screen Q2 based on information showing a schedule for May 16th stored in the schedule-book data 41. Successively, the control unit 10 causes the display unit 30 to display the created schedule screen Q2. Fig. 6 is a diagram showing an example of the daily schedule screen Q2. As shown in FIG. 6, a schedule area r2 to which the date of May 16th is allocated is set up on this daily schedule screen Q2. The "Title," "Detailed Information," "Start Time," and "End Time" corresponding to schedule information that include predetermined schedule time interval corresponding to May 16th, and a "Decorative Image" associated with the schedule information are arranged in this schedule area r2. For example, in the schedule-book data 41 shown in FIG. 2, the start date "05/16/2009," the end date "05/16/2009," the title "Have Lunch with Hanako," the detailed information "At a Store called OO CAFE in Omotesando," the start time "12:00," and the end time "16:00" are associated with the "Decorative Image d1." As described above, the start date "05/16/2009" and the end date "05/16/2009" show that May 16th includes the schedule predetermined time interval. In this case, the title "Have Lunch with Hanako," the detailed information "At a Store called OO CAFE in Omotesando," the start time/end time "12:00 to 16:00," and the heart-shaped decorative image d1 are arranged in the schedule area r2.

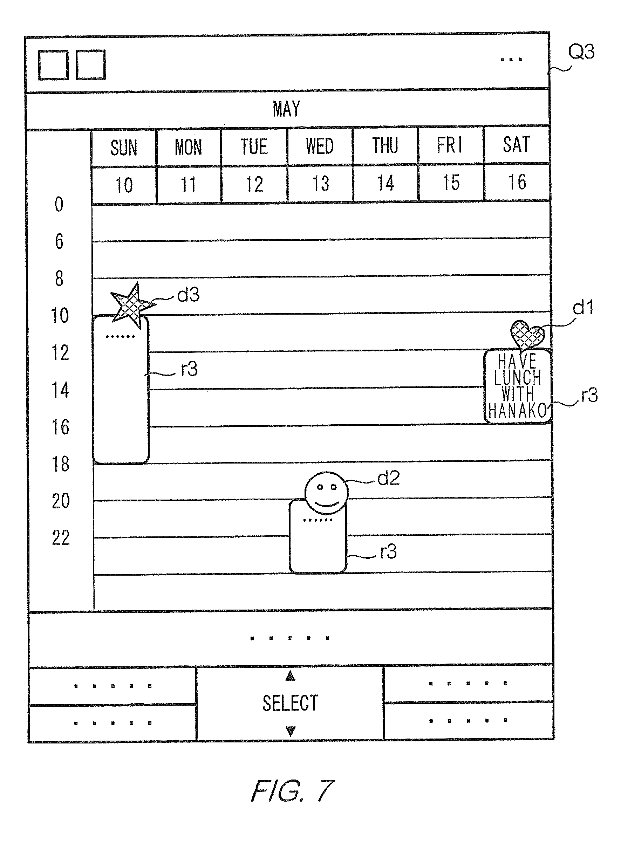

In addition, if the user wants to check weekly schedule information, the user directs a weekly schedule screen Q3 to be displayed by operating the operation unit 40. Upon receiving the direction to display the weekly schedule screen Q3, the control unit 10 creates the weekly schedule screen Q3 based on the schedule-book data 41 stored in the EEPROM 14. Successively, the control unit 10 causes the display unit 30 to display the created schedule screen Q3. Fig. 7 is a diagram showing an example of the weekly schedule screen Q3. As shown in FIG. 7, dates that play a role of time axis of the week and a time line that plays a role of time axis of a day are shown on the schedule screen Q3. A schedule area r3 to which the above predetermined schedule time interval is allocated is set up on a position corresponding to this predetermined schedule time interval on this schedule screen Q3. A "Title" corresponding to schedule information whose predetermined schedule time interval corresponds to the time interval allocated to this schedule area r3, and a "Decorative Image" associated with the schedule information in the schedule-book data 41 are arranged in this schedule area r3. For example, in the schedule-book data 41 shown in FIG. 2, the start date "05/16/2009," the start time "12:00," the end date "05/16/2009," and the end time "16:00" are associated with the title "Have Lunch with Hanako" and the "Decorative Image d1." The start date "05/16/2009," start time '"12:00,'" end date "05/16/2009," and end time "16:00" show that the predetermined schedule time interval is a time interval between 12:00 and 16:00 on May 16th. In this case, the schedule area r3 is set up on a position corresponding to 12:00 to 16:00 on May 16th on the schedule screen Q3, and a title "Have Lunch with Hanako" and a heart-shaped decorative image d1 are arranged on this schedule area r3.

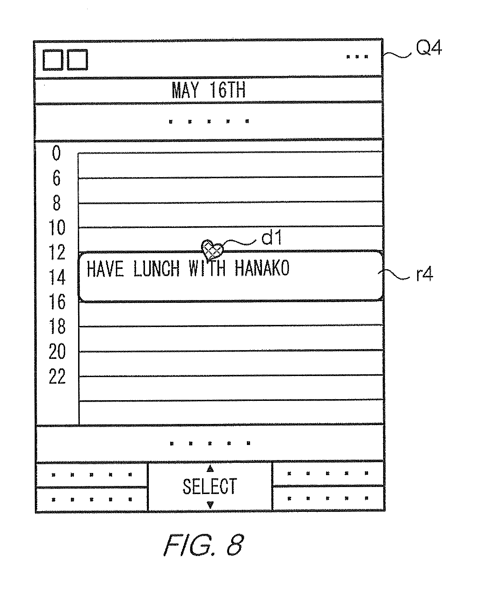

Next, if the user wants to focus his/her attention on a certain day displayed on the weekly schedule screen Q3, and check schedule information concerning that day, the user designates a schedule area r3 of the date to be focused on by operating the operation unit 40. Here, it will be assumed that the schedule area r3 for May 16th is designated. In this case, the control unit 10 creates a daily schedule screen Q4 based on information showing a schedule for May 16th stored in the schedule-book data 41. Successively, the control unit 10 causes the display unit 30 to display the created schedule screen Q4. Fig. 8 is a diagram showing an example of the daily schedule screen Q4. As shown in FIG. 8, a time line that plays a role of time axis of a day is shown on this schedule screen Q4. A schedule area r4 to which the above predetermined schedule time interval is allocated is set up on a position corresponding to this predetermined schedule time interval on this schedule screen Q4. A "Title" corresponding to schedule information whose predetermined schedule time interval corresponds to the time interval allocated to this schedule area r4, and a "Decorative Image" associated with the schedule information in the schedule-book data 41 are arranged on this schedule area r4. For example, in the schedule-book data 41 shown in FIG. 2, the start date "05/16/2009," the start time "12:00," the end date "05/16/2009," and the end time "16:00" are associated with the title "Have Lunch with Hanako" and the "Decorative Image d1." As described above, the start date "05/16/2009," start time "12:00," end date "'05/16/2009," and end time "16:00" show that the predetermined schedule time interval is a time interval between 12:00 and 16:00 for May 16th. In this case, the schedule area r4 is set up on a position corresponding to 12:00 to 16:00 for May 16th on the schedule screen Q4, and a title "Have Lunch with Hanako" and a heart-shaped decorative image d1 are arranged on this schedule area r4.

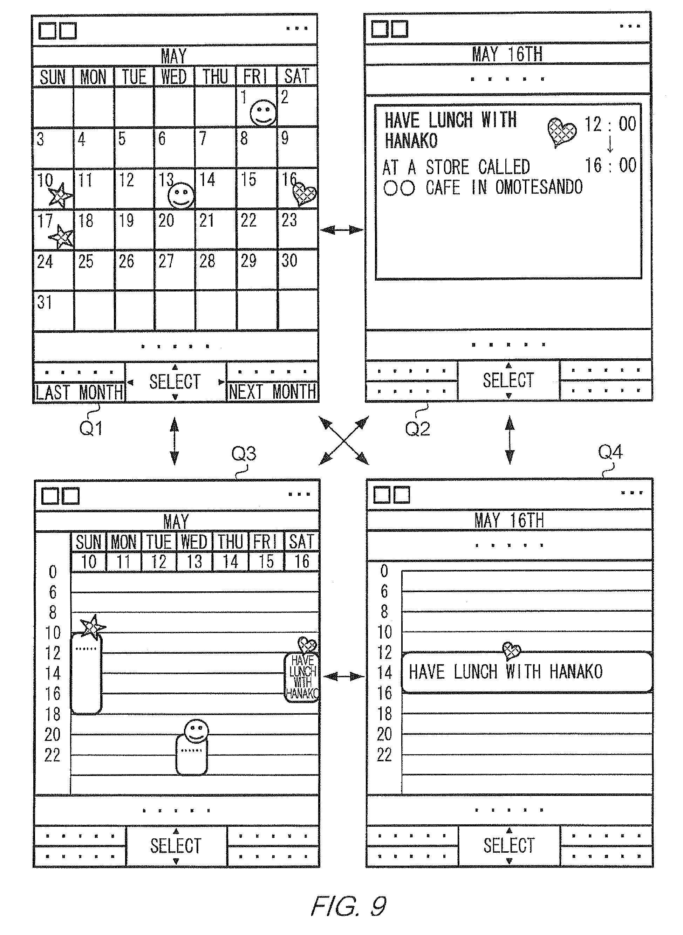

Here, the above-described schedule screens Q1 to Q4 are interchangeable as shown in FIG. 9. For example, if a user wants to change the monthly schedule screen Q1 to the weekly schedule screen Q3, the user can direct the monthly schedule screen Q1 to change to the weekly schedule screen Q3 by operating the operation unit 40.

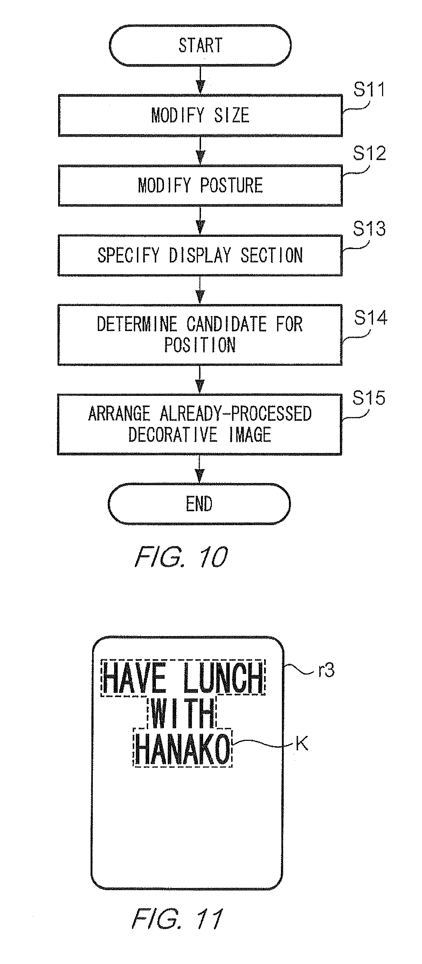

Next, by taking the above-described weekly schedule screen Q3 as an example, the arranging processing of a decorative image will be described in detail. Fig. 10 is a flowchart showing the arranging processing of the decorative image. First, the control unit 10 modifies the size of the decorative image to a size randomly selected from plural predetermined sizes (step S11). For example, if sizes "large," "medium," and "small" are predetermined, the control unit 10 modifies the size of the decorative image into a size randomly selected from these sizes. Here, if the original size of the decorative image is equal to the randomly selected size, the control unit 10 does not modify the size of the decorative image. Next, the control unit 10 modifies the posture of the decorative image into a posture randomly selected from plural predetermined postures (step S12). For example, if postures "no-leaning," "right-leaning" and "left-leaning" are predetermined, the control unit 10 rotates the decorative image so that the posture of the decorative image becomes a posture randomly selected from these postures. Here, if the posture "no-leaning" is selected, the control unit 10 does not modify the posture of the decorative image. It will be assumed hereinafter that the size of the decorative image is modified to the size "medium," and the posture of the decorative image is modified to the posture "right-leaning." In the following description, the decorative image that has been subjected to the processes of step S11 and step S12 will be called an "already-processed decorative image."

Next, the control unit 10 specifies a display section k where information is displayed in each schedule area r3 on the schedule screen Q3 (step S13). This "display section" is an area that is occupied by an image and characters other than a decorative image in each schedule area r3. This display section k can be decided, for example, based on display positions and sizes of the image and characters other than the decorative image arranged in each schedule area r3. For example, as shown in FIG. 11, if a title "Have Lunch with Hanako," is arranged in a schedule area r3, a portion occupied by the title "Have Lunch with Hanako" is specified as a display section k. Here, in the example shown in FIG. 11, gaps between characters "Have Lunch with Hanako" are included in the display section k, but these gaps may be removed from the display section k. On the other hand, the area of a circumscribing rectangle that circumscribes the characters "Have Lunch with Hanako" may be specified as the display section k.

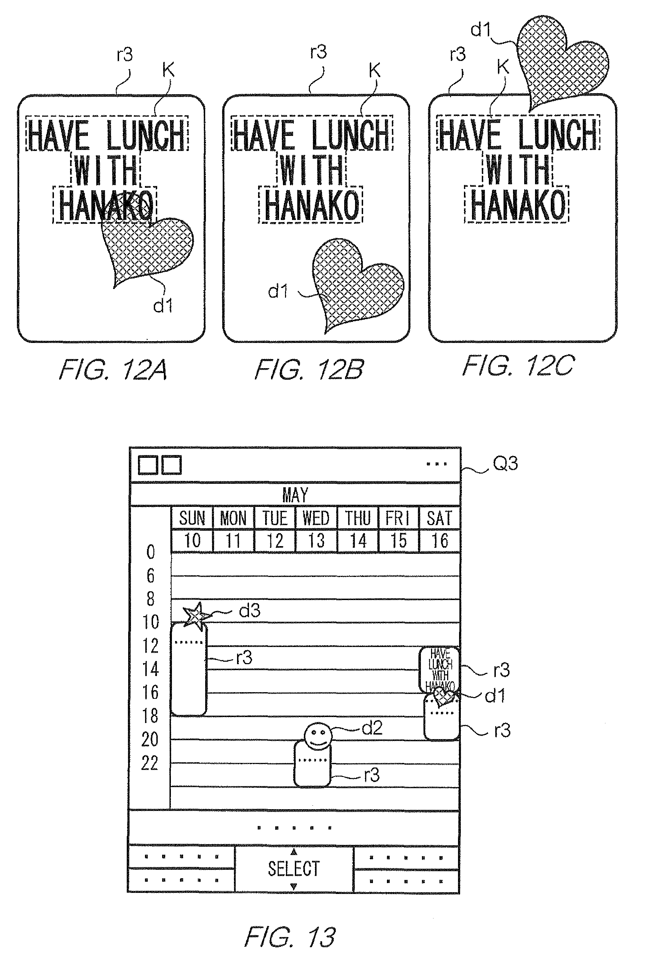

Next, the control unit 10 determines a candidate for a position on the schedule screen Q3 on which the already-processed decorative image is arranged (step S14). More specifically, the control unit 10 determines, as a candidate, a position that, if the already-processed image is arranged on the position, makes at least a part of he already-processed image overlap the schedule area r3, and further prevents the already-processed decorative image from overlapping the display section k specified at the above step S13. For example, because a part of the already-processed decorative image d1 on the position shown in FIG. 12A overlaps the display section k, this position is not decided as a candidate. On the other hand, because the entirety of the decorative image d1 on the position shown in FIG. 12B overlaps the schedule area r3 and the decorative image d1 does not overlap the display section k, this position is decided as a candidate. In addition, because a part of the decorative image d1 on the position shown in FIG. 12C overlaps the schedule area r3 and the decorative image d1 does not overlap the display section k, this position is decided as a candidate.

Next, the control unit 10 randomly selects a position out of positions determined as candidates, and arranges the already-processed decorative image on the selected position (step S15). For example, if the position shown in FIG. 12C is selected, the already-processed decorative image d1 that is "medium" in size and "right-leaning" is arranged on the position in a way that the decorative image d1 overflows out of the schedule area r3 to the upper side as shown in FIG. 7.

In addition, if the user wants to change the position of the decorative image after the decorative image is arranged, the user directs the position of the decorative image to be changed by operating the operation unit 40. In this case, after removing the decorative image from the schedule screen Q3, the control unit 10 goes back to the above step S11, and performs the arranging processing on the decorative image. After this processing, the size, the posture, or the position of the decorative image are changed on the schedule screen Q3. The user can create the position of the decorative image according to his/her preference by repeatedly changing the position of the decorative image.

In the above case, although the above description has been made as a description example under the assumption that a decorative image is arranged on a weekly schedule screen Q3, the decorative image can be arranged on the above-described monthly schedule screen Q1, daily schedule screen Q2, or daily schedule screen Q4 by performing a similar arranging processing as described above.

According to the above-described embodiment, because a decorative image is arranged so as not to overlap information displayed on the schedule area, the information displayed in the schedule area becomes legible. In addition, the decorative image is not only arranged within the schedule area, but it can be also arranged so as to overflow out of the schedule area, which makes the display of the decorative image amusing. In addition, because a user cannot guess the size, posture, or position of the decorative image that is randomly modified every time the decorative image is arranged, the user can enjoy a way the decorative image is displayed each time it is displayed.

### [Modifications]

Although the embodiment has been described as above, this embodiment can be modified in the following ways. In addition, a combination of two or more of the following modifications also can be employed.

### (Modification 1)

In the above-described embodiment, as shown in FIG. 13, if the decorative image d1 arranged on the schedule area r3 corresponding to 12:00 to 16:00 on May 16th overflows in the direction corresponding to times later than 16:00 on May 16th, schedule information to be displayed on the schedule area r3 corresponding to 16:00 on May 16th and later becomes illegible. Therefore, the control unit 10 specifies a predetermined schedule time interval based on the schedule-book data 41 stored in the EEPROM 14, and can remove, from the candidates determined at step S14, a position that, if the decorative image is arranged thereon, makes the decorative image overflow in the direction corresponding to times later than the specified time on the schedule screen. In the case of the position of the decorative image d1 shown in FIG. 13, because the decorative image d1 overflows in the direction corresponding to times later than 16:00 on May 16th, this position is removed as one of the candidates determined at step S14.

### (Modification 2)

In the above-described embodiment, if a user decides the final position on which the decorative image is arranged by repeatedly changing the position of the decorative image, a position the user likes can be anticipated based on the arrangement history of the decorative image. Therefore, it is conceivable that, after obtaining the arrangement history of the decorative image at the above step S15, the control unit 10 specifies a position on which the decorative image is frequently arranged based on the obtained history, and preferentially selects the specified position on which the decorative image is frequently arranged. Similarly, as for the size and posture of the decorative image, it is conceivable that the control unit 10 specifies a size or a posture of the decorative image that is frequently selected based on the history of the already-processed decorative image, and preferentially selects the specified size or posture.

### (Modification 3)

In the above-described embodiment, if a decorative image is a balloon type image, the decorative image can be arranged on a position that, if the decorative image is arranged thereon, makes the decorative image overflow out of the schedule area. In this case, attribute information as to whether the decorative image is a balloon type image or not is attached to the decorative image, and the control unit 10 judges whether the decorative image is a balloon type image or not based on this attribute information. If the decorative image is determined to be a balloon type image in this judgment, the control unit 10 extracts such positions from the positions determined as candidates at the above step S14 that, if the already-processed decorative image is arranged thereon, make the already-processed decorative image overflow out of the schedule area, and the control unit 10 arranges the already-processed decorative image on a position selected from the extracted positions. In addition, if the decorative image is not determined to be a balloon type image in the above judgment, it is conceivable that the control unit 10 extracts such positions from the positions determined as candidates at the above step S14 that, if the already-processed decorative image is arranged thereon, make the decorative image contained within the schedule area, and the control unit 10 arranges the already-processed decorative image on a position selected from the extracted positions.

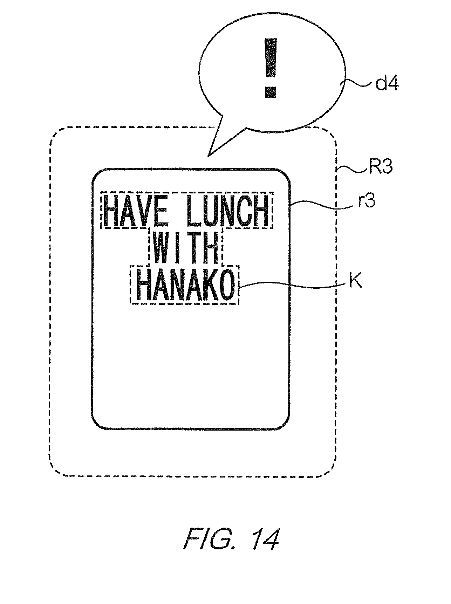

In addition, if a decorative image is a balloon type image, it is also conceivable that the decorative image is arranged on a position that, if the decorative image is arranged thereon, prevents the decorative image from overlapping the schedule area. For example, as shown in FIG. 14, in the case where a balloon type decorative image d4 is arranged, the control unit 10 sets up an expanded area R3 that is an area obtained by expanding a schedule area r3 to a predetermined extent. This expanded area R3 is an example of a predetermined range and includes the schedule area r3. In addition, at the above step S14, the control unit 10 determines, as a candidate for a position on the schedule screen Q3 at which the already-processed balloon type decorative image d4 is arranged, a position that, if the already-processed decorative image is arranged thereon, makes at least a part of he already-processed decorative image overlap the setup expanded area R3, and further prevents the already-processed decorative image d4 from overlapping the display section k specified at the above step S13. In this case, a position shown in FIG. 14 is determined as a candidate. Not only in the case of the decorative image being a balloon type image, but also in the case of the decorative image not being a balloon type image, a position that, if the decorative image is arranged thereon, prevents the decorative image from overlapping the schedule area can be determined as a candidate for a position on which the decorative image is arranged.

### (Modification 4)

In the above embodiment, if the decorative image is arranged on a position that, if the decorative image is arranged thereon, makes the decorative overflow from the schedule area, the decorative image can be arranged so as to be surrounded by a balloon. In this case, it is better to train the direction shown by the balloon on the schedule area.

### (Modification 5)

In the above embodiment, if a user designates a position on which the decorative image is to be arranged by operating the operation unit 40, a position nearest to the designated position among the positions determined as candidates can be determined to be a position on which the decorative image is arranged. In this case, the control unit 10 selects a position that is least distant from the position designated by the user, and arranges the already-processed decorative image on the selected position.

### (Modification 6)

In the above embodiment, an area in which a decorative image is to be arranged can be determined according to a type of schedule. In this case, a user designates a type of schedule such as "work," "private," or the like, when s/he inputs schedule information. The control unit 10 adds the above "schedule information," "decorative image," and the selected "type of schedule" to the schedule-book data 41. An area in which the decorative image is to be arranged is set up in this "type of schedule." Successively, the control unit 10 specifies a "type of schedule" associated with a decorative image to be arranged in the schedule-book data 41. Next, the control unit 10 extracts from positions determined as candidates at above step S4 positions included in an area set up in association with the specified "type of schedule," and arranges the decorative image at a position selected from the extracted positions. For example, if a right area of the schedule area is set up in association with a type of schedule "work," a decorative image corresponding to the schedule "work" is arranged within the right area of the schedule area. In addition, if a left area of the schedule area is set up in association with a type of schedule "private," a decorative image corresponding to the schedule "private" is arranged within the left area of the schedule area.

### (Modification 7)

In the above embodiment, although the size or posture of a decorative image is modified, other attributes of the decorative image can also be modified. For example, the color of a decorative image can be changed to another color determined randomly.

### (Modification 8)

In the above embodiment, in the case where information other than schedule information (referred to as "non-schedule information" hereinafter) is arranged in a schedule area, a portion that is occupied by the schedule information and the non-schedule information in a schedule area can be specified as a display section k. Dates, and the like, in the schedule area r1 shown in FIG. 5 are cited as pieces of non-schedule information. In addition, if weather forecast information showing a weather forecast is arranged in a schedule area, this weather forecast information is also treated as non-schedule information.

### (Modification 9)

In the above embodiment, in the case of changing the positions of decorative images, only the position of a decorative image selected by a user can be changed. In this case, the user selects a decorative image whose position he/she wants to change from decorative images arranged on a schedule screen by operating the operation unit 40. After removing the selected decorative image from the schedule screen, the control unit 10 goes back to the above step S11, and performs the above arranging processing on the selected decorative image.

### (Modification 10)

In the above embodiment, the control unit 10 can select plural positions determined as candidates at the above step S15 one-by-one, in order. In this case, the control unit 10 allocates numbers to the positions determined as candidates, and, for example, the control unit 10 selects a position with a number 1 in the first selection. In the second selection made when the position of the decorative image is changed, the control unit 10 selects a position with a number 2. In brief, the control unit 10 has only to arrange a decorative image on a position selected from the positions determined as candidates. In a similar way, as for the size or posture of a decorative image, the control unit 10 can select predetermined sizes or postures of the decorative image one-by-one, in order.

### (Modification 11)

In the above embodiment, although an example in which a decorative image is arranged on a schedule screen has been explained, a place where the decorative image is arranged is not limited to the schedule screen. For example, if the communication apparatus has a memo function, and created memo information is displayed on a memo display screen, it is conceivable that arranging processing similar to the above arranging processing is performed to arrange a decorative image on this memo display screen.

### (Modification 12)

In the above embodiment, the processing performed by the CPU 11 of the communication apparatus 1 can be performed through cooperation between the CPU 11 and another hardware device, or can be performed by one or more hardware devices instead of the CPU 11. In addition, the processing performed by the CPU 11 can be realized by a single program, or by plural programs. In addition, each program executed by the CPU 11 can be supplied in the state of being stored in a computer-readable medium such as a magnetic recording medium (a magnetic tape, a magnetic disk, or the like), an optical recording medium (an optical disk, or the like), a magnetooptical recording medium, a semiconductor memory. In addition, this program can be downloaded via communication lines such as the Internet.

## Claims

1. An information processing apparatus comprising:
a display means that displays a screen having an area in which information is arranged;
a memory means that stores the information arranged in the area in association with an image to be attached to the information;
a specifying means that specifies a display section, at which the information stored by the memory means is displayed, in the area in which the information is arranged;
a candidate determining means that determines, as a candidate for a position of the screen on which the attached image is arranged, a position that, if the attached image is arranged thereon, makes at least a part of the attached image overlap a predetermined range in the area in which the information stored in association with the attached image by the memory means is arranged, and further prevents the attached image from overlapping the display section specified by the specifying means; and
an arranging means that arranges the attached image stored by the memory means on the position selected from a plurality of positions as candidates determined by the candidate determining means.

2. The information processing apparatus according to claim 1, wherein the arranging means arranges the attached image stored by the memory means on a position that the arranging means randomly selects from the plurality of positions determined to be the candidates by the candidate determining means.

3. The information processing apparatus according to claim 1 or claim 2, further comprising a modifying means that modifies the size of the attached image stored by the memory means to a randomly determined size, or the posture of the attached image to a randomly determined posture, wherein the arranging means arranges the attached image at least one of whose size and posture is modified by the modifying means.

4. The information processing apparatus according to claim 1 or claim 2, wherein
the memory means stores the information showing a schedule with a pre-specified time;
a time axis is arranged on the screen;
the information stored by the memory means is arranged on a position, which corresponds to the time of the schedule shown by the information, on the time axis arranged on the screen; and
the candidate determining means specifies the time of the schedule shown by the information stored in association with the attached image by the memory means and removes, from the candidates, a position that, if the attached image is arranged thereon, makes the attached image overflow in the direction corresponding to times later than the specified time on the time axis arranged on the screen.

5. The information processing apparatus according to claim 1, wherein the arranging means specifies, after obtaining the disposal history of the attached image, a position on which the attached image is frequently arranged based on the obtained history, and preferentially selects the specified position on which the attached image is frequently arranged.

6. A program that causes a computer to perform the steps of:
displaying a screen having an area in which information is arranged;
storing the information arranged in the area in association with an image to be attached to the information;
specifying a display section, at which the information stored by the memory means is displayed, in the area in which the information is arranged;
determining, as a candidate for a position of the screen on which the attached image is arranged, a position that, if the attached image is arranged thereon, makes at least a part of the attached image overlap a predetermined range including the area in which the information stored in association with the attached image by the memory means is arranged, and further prevents the attached image from overlapping the specified display section; and
arranging the attached image stored by the memory means on the position selected from a plurality of positions determined as the candidates.
